# FASCICULE DE BREVET EUROPEEN

(11) **EP 1 489 388 B1**
(45) Date de publication et mention de la délivrance du brevet: **26.10.2016**
(21) Numéro de dépôt: 04291493.7
(22) Date de dépôt: 15.06.2004
(51) Int. Cl.: G01D 5/244

(54) **Système de codage optique haute précision**
Hochpräzises optisches Kodiersystem
High precision optical encoding system

(30) Priorité: 19.06.2003 FR 0307405
(43) Date de publication de la demande: 22.12.2004
(73) Titulaire: Codechamp S.A., 23190 Champagnat (FR)
(72) Inventeur: Gaumet, Daniel, 23190 Champagnat (FR)
(74) Mandataire: Debay, Yves

(56) Documents cités:
- EP-A- 0 369 031
- EP-A- 0 874 223
- EP-A1- 0 369 031
- WO-A-03/034000
- DE-A1- 10 034 733
- US-A- 5 432 339
- US-A1- 2002 121 992

## Description

La présente invention concerne un système de codage optique haute précision et le procédé de codage optique associé, permettant de compenser les erreurs de lecture d'au moins une piste disposée sur un disque codé.

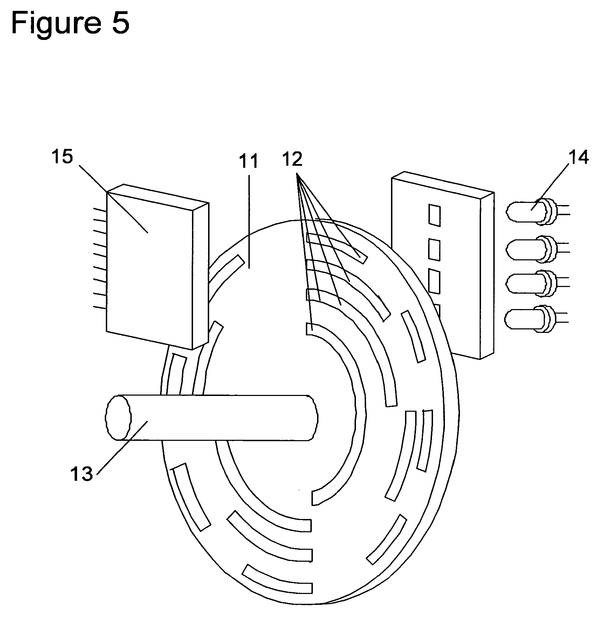

Selon la figure 5, il est connu dans l'art antérieur, qu'un codeur optique de type absolu comporte un disque solidaire (11) de l'axe (13) dont l'on veut mesurer l'angle de rotation. Ce même disque (11) présente des pistes circulaires concentriques (12), elles-mêmes comportant des zones alternativement opaques et transparentes. Ces zones sont de dimensions égales sur une piste donnée. Une lumière, en provenance par exemple d'une batterie de diodes laser (14), éclaire chaque piste (12). Le signal optique de sortie est converti en signal électrique analogique par une batterie de capteurs (15), par exemple de type photodiodes. Lorsqu'un photorécepteur reçoit les rayons lumineux, il produit un signal électrique analogique, en général, proche d'un signal sinusoïdal. Ce signal est ensuite traité par l'intermédiaire d'un convertisseur analogique / numérique ou tout autre procédé, pour obtenir un signal en créneau. La position angulaire du disque est définie par un mot binaire résultant par exemple d'un calcul d'interpolation angulaire. Il est également connu dans l'art antérieur, que la résolution d'un codeur optique est déterminée par la précision avec laquelle le codeur est fabriqué et monté. La précision peut être limitée par la précision des gravures de la piste, par des effets de bord de la fenêtre de précision, par l'irrégularité de l'intensité de la source lumineuse, par la précision des têtes de lecture, par le décentrage et le voilage du disque. Ces imprécisions se traduisent par des erreurs de forme des signaux sensiblement sinusoïdaux résultant de la lecture d'une piste effectuée par une tête de lecture. Afin de remédier aux imprécisions et erreurs de montages, des systèmes sont déjà connus tel que le système décrit par le brevet FR 9908159, permettant d'enrichir le mot binaire résultant de la lecture d'une première piste, dite piste fine, par des bits supplémentaires obtenus par une opération de levée de doute en V. Cependant ce système de compensation d'imprécision par levée de doute en V ne corrige pas les possibles erreurs de forme, dues à l'imprécision des têtes de lectures ou aux imprécisions de gravures de la piste. De plus, afin de compenser le défaut de décentrage du disque codé, il est connu un système à codage optique permettant d'effectuer une moyenne entre des valeurs angulaires résultant de la lecture d'une piste par au moins deux têtes de lecture. Cette moyenne réalisée à partir des deux relevés compense que très peu l'erreur de forme.

Le document WO 03/034000 propose un dispositif comprenant un codeur avec une échelle fixe montée d'une tête de lecture glissant linéairement le long de l'échelle et intégrant un circuit d'interpolation de signaux sensiblement sinusoïdaux provenant de la tête de lecture du codeur avec une redirection du signal issu du circuit d'interpolation vers un compteur. Un tel dispositif de codage présente toutefois l'inconvénient de ne pas permettre une correction de plusieurs erreurs de forme dues à une imprécision de lecture de piste d'un codeur et notamment une détermination d'une position précise du codeur à partir de la mesure opérée par le système de codage.

Le document DE 10034733 propose un procédé et son système associé permettant de déterminer à l'aide d'un signal, la position à un corps rotatif qui génère des signaux de mesure sinusoïdaux qui sont périodiquement échantillonnés par deux codeurs incrémentaux. Le signal est amélioré par un procédé de correction basé sur une régression pour l'amplitude et la phase et des mesures précises pour l'interpolation angulaire.

Le document US 2002/0121992 propose un moyen de contrôle et de commande d'un système, par exemple des moteurs linéaires ou rotatifs, ce moyen de contrôle étant associé à un dispositif de retour prenant en compte des signaux générés par un codeur optique ou un codeur magnétique. Le dispositif de retour reçoit en entrée par le codeur deux signaux sinusoïdaux déphasés et fournit en sortie une valeur représentative du nombre approximatif de pas réalisés par le moteur. Le dispositif de retour comprend un convertisseur analogique numérique, une table de consultation de données arc-tangente, un détecteur de cycle, un compteur, une mémoire flash comprenant des données de calibrage, un processeur numérique, un générateur de pulsation, des bus et des connexions pour transmettre les signaux à travers les différents éléments du dispositif. Les données mémorisées dans la mémoire flash sont des données de calibrage préenregistrées lors d'une simulation permettant au dispositif de retour d'incrémenter ou de décrémenter immédiatement des pulsations aux pulsations mesurées pour que l'avancement du système corresponde à la commande envoyée. Un fichier de données de calibrage est obtenu par commande de déplacement du moteur par exemple à des intervalles égaux et par mesure précise de la position d'arrivée par un élément laser. Ces données sont donc obtenues en fonction de la commande envoyée au moteur et de la mesure reçue par l'élément laser et ne sont pas spécifique à chaque tête de lecture.

Le document EP 0874223 propose un circuit d'interpolation pour codeur afin d'obtenir des données d'interpolation exactes à l'intérieur d'une période à partir de deux signaux sinusoïdaux encodés de différentes phases. Ce circuit produit les données de correction soit par un calcul d'une équation combinant la donnée d'angle d'interpolation et la donnée de déviation, soit par l'utilisation d'une table de mémorisation comprenant des données de corrections extraites en fonction de la donnée d'angle d'interpolation et de la donnée de déviation. Cependant, le circuit permet uniquement de corriger par l'utilisation de données théoriques obtenues par une équation, soit l'erreur de déviation d'amplitude soit l'erreur de déviation de phase, mais pas les deux à la fois.

La présente invention a pour but de pallier certains inconvénients de l'art antérieur en proposant un système de codage optique haute précision effectuant un procédé spécifique permettant de compenser les erreurs de forme dues à une imprécision de lecture de la piste, la lecture étant réalisée par au moins une tête de lecture.

Ce but est atteint par un système de codage optique haute précision, conforme à la revendication 1.

Un autre but est de proposer un procédé de codage optique à haute précision, conforme à la revendication 3.

D'autres particularités et avantages de la présente invention apparaîtront plus clairement à la lecture de la description ci-après, faite en référence aux dessins annexés, dans lesquels :
- la figure 1 représente le schéma représentatif du système de codage optique haute précision, de la présente invention ;
- la figure 2 représente le schéma représentatif du procédé réalisé par le système de codage optique haute précision, de la présente invention ;
- la figure 3 présente le schéma représentatif d'un disque optique associé à 4 têtes de lecture,
- les figures 4a et 4b représentent les courbes représentatives de signaux sensiblement sinusoïdaux résultant de la lecture d'une piste suivant, la forme des signaux respectant les gravures de la piste suivant en particulier les écarts réguliers ou irréguliers disposés entre les réticules ;
- la figure 5 présente le schéma représentatif d'un codeur optique usuel, connu de l'art antérieur.

Un codeur optique absolu usuel permet de connaître la valeur angulaire liée à la position, par exemple, d'un bras mécanique en rotation autour d'un axe. Cette valeur angulaire obtenue par, par exemple un procédé d'interpolation angulaire, peut avoir une valeur proche de la position réelle du bras mécanique autour de l'axe, mais cette valeur n'est pas forcément définie de manière précise. En effet, des erreurs peuvent s'insérer lors du codage. Ces erreurs sont la conséquence de multiples défauts engendrés par les différents composants utilisés par le codeur. Parmi ces erreurs certaines sont déjà compensées par le système en réalisant par exemple plusieurs mesures de la même position angulaire et en effectuant une moyenne des différentes valeurs angulaires correspondant aux mesures précédemment faites. Ce type de correction permet de corriger le défaut de décentrage du disque quand celui-ci a été mal assemblé.

La présente invention se penche plus particulièrement sur l'erreur de forme engendrée par différents composants du codeur, lors de la lecture de la piste du disque codé. Pour réaliser un codage numérique certains codeurs optiques réalisent un procédé d'interpolation angulaire nécessitant l'utilisation de signaux sinusoïdaux de type sinus ou cosinus. Ces signaux résultant de la lecture d'au moins une piste par au moins une tête de lecture sont proches d'un signal de type sinus ou d'un signal de type cosinus. L'erreur de forme joue sur la forme sinusoïdale du signal analogique. Celui-ci est, par exemple déphasé de quelques degrés, par rapport à la forme théorique qu'il devrait avoir. Ainsi le signal analogique n'est plus sensiblement un signal sinus ou un signal cosinus et le calcul angulaire réalisé par le codeur en utilisant ces signaux erronés donne un résultat également erroné. L'erreur de forme peut être engendrée par plusieurs défaut lors de la lecture d'une piste.

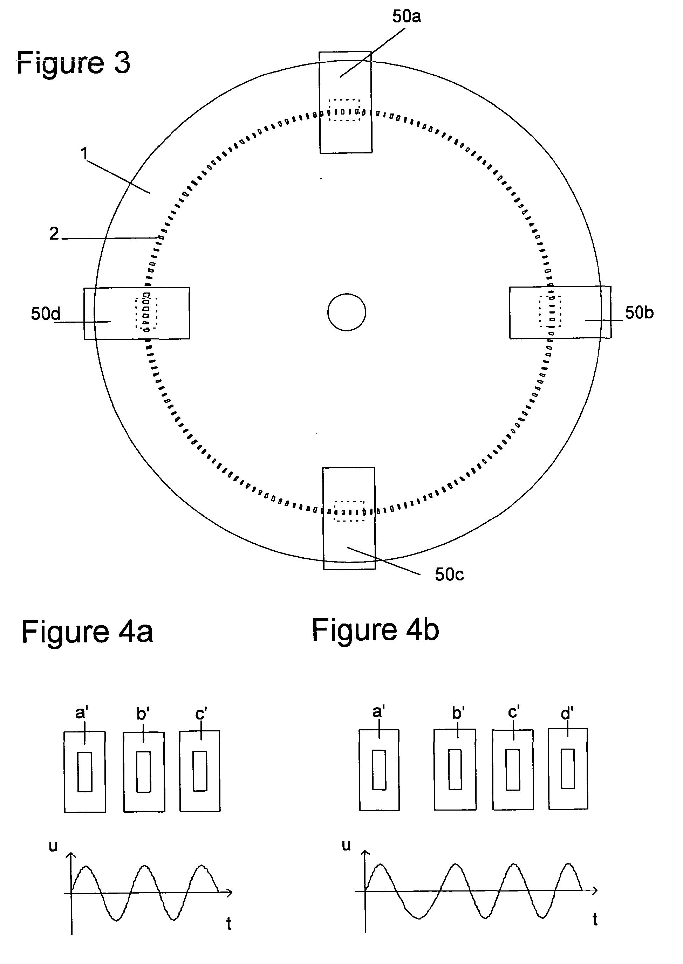

Un premier défaut est lié aux imprécisions de lecture des têtes de lecture du codeur permettant de convertir le signal optique en signal analogique sensiblement sinusoïdal. Un codeur optique comprend plusieurs têtes de lecture, par exemple 4 pour un codeur très précis. Comme représenté sur la figure 3, ces têtes de lecture (50a, 50b, 50c, 50d) peuvent être placées de manière décalée parallèlement à la piste du disque et déphasées par exemple de 90° les unes par rapport aux autres. Chaque tête de lecture génère une erreur particulière, liée par exemple par un composant défectueux ou imprécis.

Un deuxième défaut lié à l'erreur de forme concerne l'irrégularité de l'intensité de la source lumineuse permettant de fournir à travers le disque codé un signal optique. Cette irrégularité peut être traduite par un mauvais positionnement de la source par rapport au disque, par exemple ils ne sont pas parallèles l'un par rapport à l'autre ou par un composant défectueux de la source, par exemple une diode dont l'intensité lumineuse est moins forte que les autres. Le photo-détecteur convertit le signal optique en signal analogique en fonction de l'intensité lumineuse traversant les différents réticules gravés dans le disque codé. La variation des zones opaques et transparentes gravées sur le disque engendre un signal optique varié. Celui-ci, une fois converti, donne un signal analogique dit sinusoïdal. Si l'intensité de la source lumineuse est irrégulière le signal résultant de la détection sera également irrégulier et comprendra un défaut de forme.

Un dernier défaut produisant une erreur de forme du signal analogique, concerne les gravures ou réticules non précises ou irrégulières du disque codé. En référence aux figures 4a et 4b, chaque écartement entre le début d'un réticule et le début du réticule suivant doit être fixe et supérieur à 11 micromètres, permettant d'obtenir un signal net. Si l'écartement n'est pas le même entre chaque réticule (voir figure 4b), alors le signal analogique, résultant de la lecture de ces réticules, sera sinusoïdal mais avec un déphasage ne permettant pas d'obtenir un signal de type sinus ou un signal de type cosinus. Ainsi lors du calcul de l'interpolation angulaire, la valeur angulaire de résultat sera erronée par l'erreur de forme du signal mesuré.

Tous ces défauts, précédemment cités, ne sont pas la cause d'un vieillissement du système mais dus à des imprécisions de fabrication.

La présente invention permet de compenser l'erreur de forme en réalisant des calculs d'interpolation angulaire à partir de mesures effectuées par chaque tête de lecture en les corrigeant ensuite par une comparaison entre les valeurs calculées et des valeurs justes préenregistrées dans une mémoire. Les différentes valeurs corrigées sensiblement identiques, résultant de la lecture de chaque tête de lecture sont ensuite moyennées par un calcul de moyenne et produisent ainsi un résultat unique précis représentatif de la position angulaire du disque. Ce procédé revient à faire la correction de la valeur de sortie du calcul d'interpolation pour la rendre linéaire et permet ainsi d'augmenter la résolution et la précision du résultat.

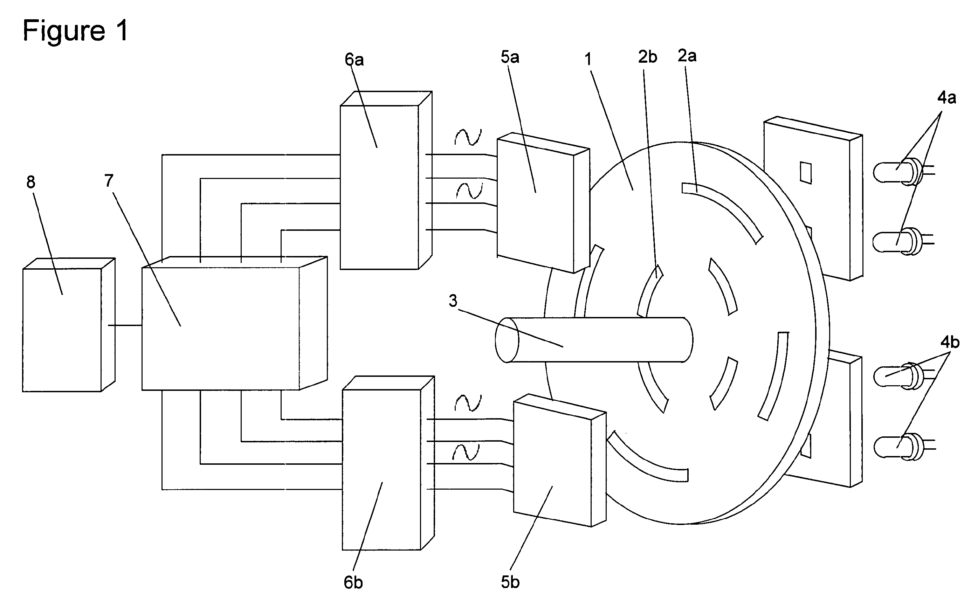

En référence à la figure 1, le système de codage optique haute précision de la présente invention comprend tout d'abord un disque (1) codé solidaire d'un axe (3) entraînant la rotation du disque. Le disque (1) comporte au moins une piste (2) constituée de zones opaques et transparentes. Le système, selon l'invention, comprend également, une source lumineuse (4) produisant de la lumière traversant le disque codé (1) et étant ensuite captée par au moins un photo-détecteur (5). Le photo-détecteur va convertir le signal optique capté en un signal analogique sensiblement sinusoïdal. Dans le cas d'espèce on veut obtenir deux signaux sinusoïdaux dont un signal sinus et un signal cosinus, afin d'effectuer une interpolation angulaire par exemple du type arc-tangente, exécutée par un calculateur. Ainsi le système peut par exemple comprendre un disque codé comportant deux pistes circulaires et concentriques dont la périodicité des zones opaques et transparentes de chaque piste est décalée par rapport à la périodicité des zones opaques et transparentes de l'autre piste permettant d'obtenir après détection par le système deux signaux sinusoïdaux déphasés l'un par rapport à l'autre de 90°. Ces signaux sinusoïdaux sont numérisés dans un moyen de conversion analogique/numérique (6) et entrent ensuite dans un calculateur (7) qui va les traiter et réaliser le calcul d'interpolation angulaire. Le système comprend également un moyen de mémorisation (8) qui stocke les données de correction d'erreur au préalablement enregistrées.

Pour obtenir ces données mémorisées dans le moyen de mémorisation (8), il faut tester le codeur après sa fabrication. Celui-ci est testé sur un moyen de contrôle tel qu'un banc de contrôle. Ce moyen de contrôle va permettre de détecter par échantillonnage de la période d'un signal sinusoïdal, les erreurs de forme engendrées par chaque tête de lecture et de les stocker dans la mémoire (8). Cette phase peut être définie comme une mémorisation de la forme du signal sinusoïdal. Au cours de cette phase, le calculateur du codeur à étalonner fournit le résultat du calcul d'interpolation et le banc de contrôle va délivrer la valeur de la correction à mémoriser en association avec le résultat d'interpolation.

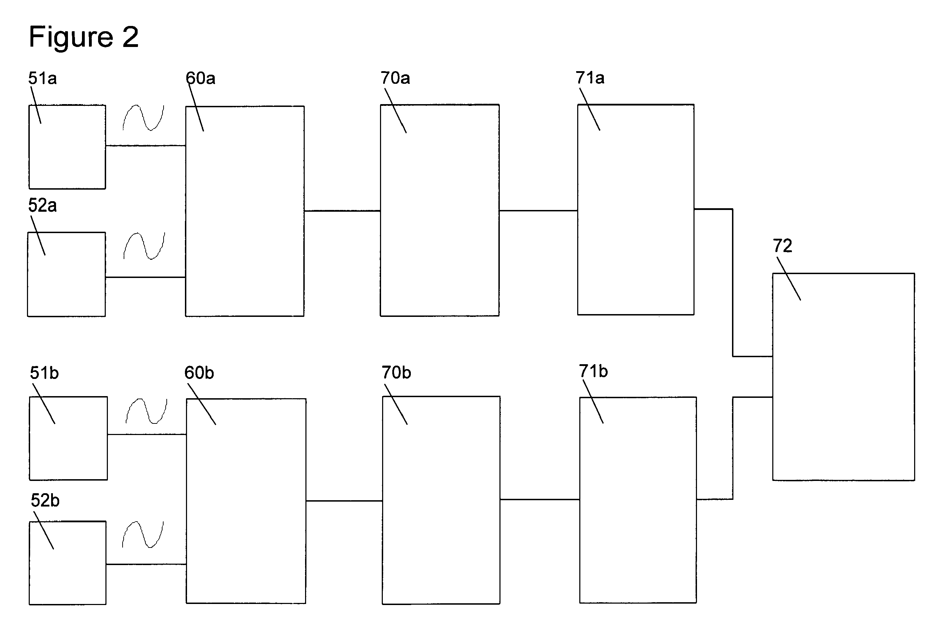

Le système, selon la présente invention, réalise un procédé particulier, représenté sur la figure 2, permettant la correction de l'erreur de forme et de l'erreur de décentrage du disque. Ce procédé comprend 4 étapes importantes. La première étape consiste en la lecture de la piste disposée sur le disque codé par chaque tête de lecture (51a, 52a, 51b, 52b). La lecture permet d'obtenir au moins deux signaux analogiques (51 a,52a ou 51 b, 52b) sensiblement sinusoïdaux par tête de lecture (50a ou 50b), dont chacun des signaux sensiblement sinusoïdaux (51 a, 52a) résultant d'une tête de lecture (50a) est respectivement sensiblement identique aux signaux sensiblement sinusoïdaux (51 b, 52b) résultant de la deuxième tête de lecture (50b). Chaque tête de lecture peut fournir un signal de type sinus (51a, 51b) et un signal de type cosinus (52a, 52b). Ces signaux étant erronés d'un défaut de forme périodique et spécifique par tête de lecture.

La deuxième étape consiste en la conversion analogique/numérique (60a, 60b) réalisée par un moyen de conversion analogique/numérique. Cette étape permet de convertir les signaux analogiques sensiblement sinusoïdaux (51 a, 52a, 51b, 52b) résultant de la lecture de la piste en des signaux numériques qui seront ensuite traités par le calculateur (7).

La troisième étape consiste au calcul d'interpolation angulaire (70a, 70b) réalisé par le calculateur (7). Cette étape permet d'obtenir, à partir d'au moins deux signaux sinusoïdaux (51a, 52a ou 51b, 52b) résultant de la lecture d'une piste par tête de lecture (50a ou 50b), un résultat sur la valeur de positionnement angulaire absolu du disque codé. Le calculateur obtient ainsi au moins deux résultats sensiblement identiques correspondant aux lectures effectuées par aux moins deux têtes de lecture (50a, 50b).

La quatrième étape consiste en la correction de l'erreur de forme (71 a, 71 b) représentative des imprécisions engendrées lors de la lecture de la piste par chaque tête de lecture. Cette étape de correction est réalisée par le calculateur (7) et un moyen de mémorisation (8). Le calculateur (7) fait appel au moyen de mémorisation (8) pour réaliser une comparaison entre au moins une valeur résultant du calcul d'interpolation (70a ou 70b) précédemment effectué et une valeur stockée dans le moyen de mémorisation (8). La valeur stockée est représentative de la correction concernant l'erreur de lecture de chaque tête de lecture. Toutes les valeurs calculées lors de l'interpolation angulaire sont ainsi corrigées.

La dernière étape du procédé de codage optique haute résolution, selon l'invention, permet de corriger l'erreur de décentrage du disque codé. Cette étape réalise le calcul d'une moyenne numérique d'au moins deux valeurs corrigées lors de la phase de correction (71a et 71b). Ces valeurs étant sensiblement identiques et représentatives de la valeur de positionnement angulaire absolue du disque codé. Ce calcul est réalisé par le calculateur.

Le résultat du procédé de codage optique à haute précision est représenté par un mot binaire comprenant des bits de poids faible et des bits de poids fort. Les bits de poids faible peuvent indiquer la valeur moyennée du calcul d'interpolation résultant de la lecture d'une piste par au moins deux têtes de lecture. Les bits de poids fort du mot binaire peuvent indiquer la valeur moyennée de la correction représentative de l'erreur de forme résultant de la lecture d'une piste par au moins deux têtes de lecture.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de codage optique haute précision, effectué par un codeur optique, ledit codeur optique comprenant au moins, un disque mobile codé (1) comportant au moins une piste circulaire (2a, 2b) formée par des zones alternativement opaques et transparentes, une source lumineuse (4a, 4b) éclairant la piste, au moins une tête de lecture (5a, 5b) permettant de convertir un signal optique généré par la source lumineuse (4a, 4b) et le disque (1) en deux signaux analogiques sensiblement sinusoïdaux (51a, 51b, 52a, 52b), l'un de type sinus, l'autre de type cosinus, un moyen de conversion (6a, 6b) analogique / numérique des signaux et un calculateur (7) réalisant le traitement des données, par au moins un calcul d'interpolation angulaire, le système de codage optique à haute précision comprend un moyen de mémoriser des données (8), les données constituant des valeurs représentatives de corrections relatives aux erreurs de forme des signaux sensiblement sinusoïdaux sont mises en relation avec le calcul d'interpolation angulaire traité par le calculateur, afin de corriger lesdites erreurs de forme concernant les imprécisions liées à la lecture de la piste du disque codé,
**caractérisé en ce que** les valeurs représentatives de corrections relatives mémorisées dans le moyen de mémorisation (8) sont au préalablement enregistrées, lesdites valeurs représentatives de corrections relatives étant obtenues par une phase d'étalonnage à un moment précis, réalisée sur chaque tête de lecture du codeur optique lors de la lecture d'une période de la piste et lors d'un calcul d'interpolation angulaire des signaux lus réalisé par le calculateur (7) du système de codage, ladite phase d'étalonnage étant réalisée pour chaque piste sur un moyen de contrôle permettant de comparer les valeurs résultantes du calcul d'interpolation à des valeurs exactes.

2. Système de codage optique haute précision, selon la revendication
**caractérisé en ce qu'**il peut comprend 4 têtes de lectures (50a, 50b, 50c, 50d) disposées parallèlement à la piste et décalées les unes par rapport aux autres avec un décalage de 90°, permettant d'obtenir pour chaque piste un résultat moyenné très précis sur la position angulaire absolue du disque codé.

3. Procédé de codage optique à haute précision, effectué par un codeur optique, ledit codeur optique comprenant au moins, un disque codé (1) comportant au moins une piste circulaire (2a, 2b) formée par des zones alternativement opaques et transparentes, une source lumineuse (4a, 4b) éclairant la piste, au moins une tête de lecture (5a, 5b) permettant de convertir un signal optique généré par la source lumineuse (4a, 4b) et le disque (1) en en deux signaux analogiques sensiblement sinusoïdaux, l'un de type sinus, l'autre de type cosinus, un moyen de conversion (6a, 6b) analogique/numérique des signaux et un calculateur (7) réalisant le traitement des données, le système de codage optique à haute précision étant **caractérisé en ce qu'**il comprend les étapes suivantes :
- une étape de lecture de la piste (50) disposée sur le disque codé par la tête de lecture, permettant d'obtenir au moins deux signaux analogiques sensiblement sinusoïdaux (51a, 51b, 52a, 52b),
- une étape de conversion analogique/numérique (60a, 60b) réalisée par un moyen de conversion analogique/numérique (6), permettant de convertir les signaux analogiques sensiblement sinusoïdaux résultant de la lecture de la piste en des signaux numériques,
- une étape de calcul d'interpolation angulaire (70a, 70b) réalisée par le calculateur, permettant d'obtenir, à partir d'au moins deux signaux sinusoïdaux résultant de la lecture d'une piste par une tête de lecture, un résultat sur la valeur de positionnement angulaire absolu du disque codé,
- une étape de correction de l'erreur de forme (71a, 71b) représentative des imprécisions engendrées lors de la lecture de la piste par au moins une tête de lecture, cette étape de correction est réalisée par le calculateur (7) et un moyen de mémorisation (8), **en ce que** le calculateur (7) fait appel au moyen de mémorisation (8) pour réaliser une comparaison entre au moins une valeur résultant du calcul d'interpolation précédemment effectué et une valeur stockée dans le moyen de mémorisation, ladite valeur stockée étant représentative de la correction concernant la lecture d'une tête de lecture,
les valeurs représentatives de corrections relatives mémorisées dans le moyen de mémorisation étant au préalablement enregistrées, lesdites valeurs représentatives de corrections relatives étant obtenues par une phase d'étalonnage à un moment précis, réalisée sur chaque tête de lecture du codeur optique lors de la lecture d'une période de la piste et lors d'un calcul d'interpolation angulaire des signaux lus réalisé par le calculateur du système de codage, ladite phase d'étalonnage étant réalisée pour chaque piste sur un moyen de contrôle permettant de comparer les valeurs résultantes du calcul d'interpolation à des valeurs exactes.

4. Procédé de codage optique haute précision, selon la revendication 3, comprenant au moins deux têtes de lecture (50a, 50b) fournissant chacune deux signaux sensiblement sinusoïdaux, chaque signal produit par une tête de lecture étant sensiblement identique au signal respectif fourni par l'autre tête de lecture, le procédé de l'invention étant **caractérisé en ce qu'**après la phase de correction (71a, 71b) d'au moins deux valeurs sensiblement identiques calculées lors de la phase d'interpolation (70a, 70b), chacune des valeurs étant représentative de la valeur de positionnement angulaire absolue du disque codée lue par chaque tête de lecture, une étape de calcul d'une moyenne numérique (72) des deux valeurs corrigées est effectuée par le calculateur (7), ladite étape de calcul permettant une meilleure précision du résultat à obtenir en corrigeant notamment une imprécision de décentrage du disque codé (1).

5. Procédé de codage optique à haute précision, selon la revendication 4, **caractérisé en ce que** le résultat du procédé de codage optique à haute résolution est représenté par un mot binaire comprenant pour les bits de poids faible, la valeur moyen née du calcul d'interpolation résultant de la lecture d'une piste par au moins deux têtes de lecture et pour les bits de poids fort, la valeur moyen née de la correction représentative de l'erreur de forme résultant de la lecture d'une piste par au moins deux têtes de lecture.

## Patentansprüche

1. System zum optischen Hochpräzisionscodieren, durchgeführt mit einem optischen Codierer, wobei der genannte optische Codierer wenigstens Folgendes umfasst: eine codierte bewegliche Scheibe (1) mit wenigstens einer kreisförmigen Bahn (2a, 2b), die durch abwechselnde opake und transparente Zonen gebildet wird, eine die Bahn beleuchtende Lichtquelle (4a, 4b), wenigstens einen Lesekopf (5a, 5b), mit dem ein durch die Lichtquelle (4a, 4b) und die Scheibe (1) erzeugtes optisches Signal in zwei im Wesentlichen sinusförmige analoge Signale (51a, 51b, 52a, 52b) umgewandelt werden kann, das eine vom Sinustyp, das andere vom Kosinustyp, einen Analog-Digital-Signalwandler (6a, 6b) und einen Rechner (7) zum Verarbeiten von Daten durch wenigstens eine Winkelinterpolationsberechnung, wobei das System zum optischen Hochpräzisionscodieren ein Datenspeichermittel (8) umfasst, wobei die Daten, die relative Korrekturen für Formfehler von im Wesentlichen sinusförmigen Signalen repräsentierende Werte bilden, in Relation zu der durch den Rechner verarbeitete Winkelinterpolationsberechnung gesetzt werden, um die Formfehler bezüglich der Ungenauigkeiten in Verbindung mit dem Lesen der Bahn der codierten Scheibe zu korrigieren,
**dadurch gekennzeichnet, dass** die im Speichermittel (8) gespeicherte relative Korrekturen repräsentierenden Werte zuvor aufgezeichnet wurden, wobei die relative Korrekturen repräsentierenden Werte durch eine Eichphase in einem genauen Moment erhalten werden, realisiert auf jedem Lesekopf des optischen Codierers beim Lesen einer Periode der Bahn und bei einer Winkelinterpolationsberechnung von gelesenen Signalen, realisiert durch den Rechner (7) des Codierungssystems, wobei die Abtastphase für jede Bahn auf einem Steuermittel realisiert wird, das einen Vergleich der von der Interpolationsberechnung resultierenden Werte mit genauen Werten zulässt.

2. System zum optischen Hochpräzisionscodieren nach Anspruch 1, **dadurch gekennzeichnet, dass** es 4 Leseköpfe (50a, 50b, 50c, 50d) umfassen kann, die parallel zu der Bahn und um einen Versatz von 90° voneinander versetzt angeordnet sind, so dass für jede Bahn ein sehr genaues mittleres Ergebnis für die absolute Winkelposition der codierten Scheibe erhalten werden kann.

3. Verfahren zum optischen Hochpräzisionscodieren, ausgeführt von einem optischen Codierer, wobei der genannte optische Codierer wenigstens Folgendes umfasst: eine codierte Scheibe (1), die wenigstens eine von abwechselnden opaken und transparenten Zonen gebildete kreisförmige Bahn (2a, 2b) ausgebildet ist, eine die Bahn beleuchtende Lichtquelle (4a, 4b), wenigstens einen Lesekopf (5a, 5b), mit dem ein von der Lichtquelle (4a, 4b) und der Scheibe (1) erzeugtes optisches Signal in zwei im Wesentlichen sinusförmige analoge Signale umgewandelt werden kann, das eine vom Sinustyp, das andere vom Kosinustyp, ein Analog-Digital-Signalwandlungsmittel (6a, 6b) und einen Rechner (7), der die Verarbeitung von Daten realisiert, wobei das System zum optischen Hochpräzisionscodieren **dadurch gekennzeichnet ist, dass** es die folgenden Schritte beinhaltet:
- einen Schritt des Lesens der auf der codierten Scheibe angeordneten Bahn (50) durch den Lesekopf, so dass wenigstens zwei im Wesentlichen sinusförmige analoge Signale (51a, 51b, 52a, 52b) erhalten werden können,
- einen Schritt des Analog-Digital-Wandelns (60a, 60b), realisiert durch ein Analog-Digital-Wandlungsmittel (6), mit dem die vom Lesen der Bahn resultierenden im Wesentlichen sinusförmigen analogen Signale in digitale Signale umgewandelt werden können,
- einen durch den Rechner realisierten Schritt des Winkelinterpolationsberechnens (70a, 70b), so dass auf der Basis von wenigstens zwei vom Lesen einer Bahn durch einen Lesekopf resultierenden sinusförmigen Signalen ein Ergebnis über den Wert der absoluten winkelmäßigen Positionierung der codierten Scheibe erhalten werden kann,
- einen Schritt des Korrigierens des Formfehlers (71a, 71b), der Ungenauigkeiten repräsentiert, die beim Lesen der Bahn durch wenigstens einen Lesekopf erzeugt werden, wobei dieser Korrekturschritt durch den Rechner (7) und ein Speichermittel (8) realisiert wird, dadurch, dass der Rechner (7) sich auf das Speichermittel (8) bezieht, um einen Vergleich zwischen wenigstens einem von der zuvor durchgeführten Interpolationsberechnung resultierenden Wert und einem in dem Speichermittel gespeicherten Wert zu realisieren, wobei der gespeicherte Wert für die Korrektur in Bezug auf das Lesen eines Lesekopfes repräsentativ ist, wobei die für im Speichermittel gespeicherte relative Korrekturen repräsentativen Werte zuvor gespeichert wurden, wobei die für relative Korrekturen repräsentativen Werte durch eine Abtastphase zu einem genauen Moment erhalten werden, realisiert auf jedem Lesekopf des optischen Codierers beim Lesen einer Periode der Bahn und bei einer durch den Rechner des Codierungssystems realisierten Winkelinterpolationsberechnung der gelesenen Signale, wobei die genannte Abtastphase für jede Bahn auf einem Steuermittel realisiert wird, mit dem die von der Interpolationsberechnung resultierenden Werte mit genauen Werten verglichen werden können.

4. Verfahren zum optischen Hochpräzisionscodieren nach Anspruch 3, umfassend wenigstens zwei Leseköpfe (50a, 50b), die jeweils zwei im Wesentlichen sinusförmige Signale liefern, wobei jedes durch einen Lesekopf produzierte Signal im Wesentlichen mit dem jeweils von dem anderen Lesekopf gelieferten Signal identisch ist, wobei das erfindungsgemäße Verfahren **dadurch gekennzeichnet ist, dass** nach der Korrekturphase (71a, 71b) von wenigstens zwei während der Interpolationsphase (70a, 70b) berechneten im Wesentlichen identischen Werten, wobei jeder der Werte für den absoluten Winkelpositionswert der von jedem Lesekopf gelesenen codierten Scheibe repräsentativ ist, ein Schritt des Berechnens eines digitalen Mittels (72) von zwei korrigierten Werten von dem Rechner (7) ausgeführt wird, wobei der genannte Rechenschritt die Erzielung einer höheren Präzision des Ergebnisses zulässt, indem insbesondere eine Dezentrierungsungenauigkeit der codierten Scheibe (1) korrigiert wird.

5. Verfahren zum optischen Hochpräzisionscodieren nach Anspruch 4, **dadurch gekennzeichnet, dass** das Ergebnis des optischen Codierverfahrens mit hoher Auflösung durch ein binäres Wort repräsentiert wird, das für die geringwertigen Bits den Mittelwert aus der Interpolationsberechnung, die vom Lesen einer Bahn durch wenigstens zwei Leseköpfe resultiert, und für die höherwertigen Bits den Mittelwert aus der Korrektur umfasst, die den Formfehler repräsentiert, der aus dem Lesen einer Bahn durch wenigstens zwei Leseköpfe resultiert.

## Claims

1. System for high-precision optical encoding, carried out by an optical encoder, said optical encoder comprising at least a coded mobile disk (1) having at least one circular track (2a, 2b) formed by alternately opaque and transparent zones, a light source (4a, 4b) illuminating the track, at least one reading head (5a, 5b) for converting an optical signal generated by the light source (4a, 4b) and the disk (1) into two substantially sinusoidal analogue signals (51a, 510b, 52a, 52b), one of sine type, the other of cosine type, a means for analogue/digital conversion (6a, 6b) of the signals and a computer (7) carrying out the processing of the data through at least one angular interpolation calculation, the high-precision optical encoding system comprising a means for storage of the data (8), the data constituting values representative of corrections relating to the errors of form of the substantially sinusoidal signals being related with the angular interpolation calculation processed by the computer, in order to correct said errors of form concerning the inaccuracies associated with the reading of the track of the coded disk,
**characterised in that** the values representative of relative corrections stored in the storage means (8) are recorded previously, said values representative of relative corrections being obtained through a calibrating phase at a precise moment, carried out on each reading head of the optical encoder during the reading of a period of the track and during an angular interpolation calculation of the signals read carried out by the computer (7) of the encoding system, said calibrating phase being carried out for each track on a control means allowing comparison of the values resulting from the interpolation calculation with correct values.

2. System for high-precision optical encoding according to claim 1, **characterised in that** it can comprise 4 reading heads (50a, 50b, 50c, 50d) disposed parallel to the track and offset one in relation to the others with an offset of 90°, allowing the production of a very accurate averaged result for the absolute angular position of the coded disk for each track.

3. Method for high-precision optical encoding, carried out by an optical encoder, said optical encoder comprising at least a coded disk (1) having at least one circular track (2a, 2b) formed by alternately opaque and transparent zones, a light source (4a, 4b) illuminating the track, at least one reading head (5a, 5b) for converting an optical signal generated by the light source (4a, 4b) and the disk (1) into two substantially sinusoidal analogue signals, one of sine type, the other of cosine type, a means for analogue/digital conversion (6a, 6b) of the signals and a computer (7) carrying out the processing of the data, the high-precision optical encoding system being **characterised in that** it comprises the following steps:
- a step for reading the track (50) disposed on the coded disk by the reading head, allowing the production of at least two substantially sinusoidal analogue signals (51a, 51b, 52a, 52b),
- a step for analogue/digital conversion (60a, 60b) carried out by a means for analogue/digital conversion (6), allowing the conversion of the substantially sinusoidal analogue signals resulting from the reading of the track into digital signals,
- a step for angular interpolation calculation (70a, 70b) carried out by the computer, allowing the production, from at least two sinusoidal signals resulting from the reading of a track by a reading head, of a result for the absolute angular positioning of the coded disk,
- a step for correction of the error of form (71a, 71b) representative of the inaccuracies produced during the reading of the track by at least one reading head, this correction step being carried out by the computer (7) and a storage means (8), **in that** the computer (7) implements the storage means (8) to carry out a comparison between at least one value resulting from the interpolation calculation carried out previously and a value stored in the storage means, said stored value being representative of the correction concerning the reading of one reading head, the values representative of relative corrections stored in the storage means being recorded previously, said values representative of relative corrections being obtained through a calibrating phase at a precise moment, carried out on each reading head of the optical encoder during the reading of a period of the track and during an angular interpolation calculation of the signals read carried out by the computer of the encoding system, said calibrating phase being carried out for each track on a control means allowing comparison of the values resulting from the interpolation calculation with correct values.

4. Method for high-precision optical encoding according to claim 3, comprising at least two reading heads (50a, 50b) each supplying two substantially sinusoidal signals, each signal produced by a reading head being substantially identical to the respective signal supplied by the other reading head, the method of the invention being **characterised in that** after the correction phase (71a, 71 b) for at least two substantially identical values calculated during the interpolation phase (70a, 70b), each of the values being representative of the absolute angular positioning value of the coded disk read by each reading head, a step for calculation of a numerical average (72) of the two corrected values is carried out by the computer (7), said calculation step allowing improved accuracy of the result to be obtained by correcting notably an inaccuracy in the centring of the coded disk (1).

5. Method for high-precision optical encoding according to claim 4, **characterised in that** the result of the high-resolution optical coding method is represented by a binary word comprising for the least significant bits the average value formed by the interpolation calculation resulting from the reading of a track by at least two reading heads and for the most significant bits the average value formed by the correction representative of the error of form resulting from the reading of a track by at least two reading heads.
